# EUROPEAN PATENT APPLICATION

(11) **EP 4 647 756 A1**
(43) Date of publication of application: **12.11.2025**
(21) Application number: 25175534.4
(22) Date of filing: 09.05.2025
(51) Int. Cl.: G01N 29/04, G01N 29/24, G01N 29/44

(54) **METHOD FOR INSPECTING A POWERPLANT COMPONENT USING A NEURAL NETWORK**

(30) Priority: 09.05.2024 US 202418659943
(71) Applicant: RTX Corporation, Farmington, CT 06032 (US)
(72) Inventor: HARTMANN, William L., Chicago, 60657 (US); COLEMAN, Ronald B., Arlington, 02474 (US)
(74) Representative: Dehns

(57) **Abstract**

A method of inspecting a component (36) for the presence or absence of a defect is provided that includes: using a transducer (48) to inspect a subject component (36) comprising a solid metallic material by transmitting a first signal into the subject component (36) and sensing the subject component (36) for a second signal produced as a result of the first signal being transmitted into the subject component (36), and producing a subject component response signal representative of the second signal; processing the subject component response signal received from the transducer (48), the processing using a neural network trained on response signal training data from pairs of training components, and the processing including producing a neural network output value; and producing an indication of a presence or an absence of a defect in the subject component (36) based on the neural network output value.

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY

According to an aspect of the present invention, a method of inspecting a component for the presence or absence of a defect is provided that includes: using a transducer to inspect a subject component comprising a solid metallic material by transmitting a first signal into the subject component and sensing the subject component for a second signal produced as a result of the first signal being transmitted into the subject component, and producing a subject component response signal representative of the second signal; processing the subject component response signal received from the transducer, the processing using a neural network trained on response signal training data from pairs of training components, and the processing including producing a neural network output value; and producing an indication of a presence or an absence of a defect in the subject component based on the neural network output value.

In an embodiment of the above, the neural network may include a self-attention mechanism.

In an embodiment according to any of the previous embodiments, each training component may be the same type as the subject component.

In an embodiment according to any of the previous embodiments, the response signal training data for each training component may include a first frequency peak.

In an embodiment according to any of the previous embodiments, each respective pair of training components may include a first training component and a second training component, wherein the first training component, the second training component, and the subject component may all be the same type.

In an embodiment according to any of the previous embodiments, the response signal training data from a respective pair of training components may include a first peak offset value representative of a first distance between the first frequency peak within a response signal of the first training component and a predetermined value, and a second peak offset value representative of a second distance between the first frequency peak within a response signal of a second training component and the predetermined value.

In an embodiment according to any of the previous embodiments, the predetermined value may be a mean value of the first frequency peak.

In an embodiment according to any of the previous embodiments, the step of processing the subject component response signal may utilize the subject component response signal and response signals from a plurality of training components.

In an embodiment according to any of the previous embodiments, the response signal training data for each training component (TC) may include a TC response signal portion for a first frequency peak, and the subject component (SC) response signal may include an SC response signal portion for the first frequency peak, and the TC response signal portion for the first frequency peak and the SC response signal portion for the first frequency peak may be combined with a location of the first frequency peak as a single representation that is input into the self-attention mechanism.

In an embodiment according to any of the previous embodiments, the method may include using the neural network to model future subject component response signals of the subject component based on a plurality of historical subject component response signals, and the neural network may be used to determine a subject component response signal rate of change and/or the neural network may be used to predict a future subject component response signal rate of change.

According to another aspect of the present invention, a component inspection system is provided that includes a signal transmitter, a signal receiver, and a controller. The controller is in communication with the signal transmitter, the signal receiver, and a non-transitory memory storing instructions. The instructions when executed cause the controller to: control the signal transmitter to transmit a first ultrasonic signal into a subject component comprising a solid metallic material; control the signal receiver to sense the subject component for a second ultrasonic signal and produce a subject component response signal representative of the second ultrasonic signal; process the subject component response signal, the processing using a neural network trained on response signal training data from pairs of training components, and the processing including producing a neural network output value; and produce an indication of a presence or an absence of a defect in the subject component based on the neural network output value.

In an embodiment of the above, the instructions when executed may cause the controller to use the neural network to model future subject component response signals of the subject component based on a plurality of historical subject component response signals.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of an airplane having a powerplant with which the present disclosure may be used.
FIG. 2 is a diagrammatic illustration of a gas turbine engine with which the present disclosure may be used.
FIG. 3 is a diagrammatic view of an embodiment of a present disclosure inspection scope engaged with a component.
FIG. 4 is a diagrammatic illustration of a present disclosure response signal data processing embodiment.
FIG. 5 is a diagrammatic illustration of a present disclosure response signal data processing embodiment.

### DETAILED DESCRIPTION

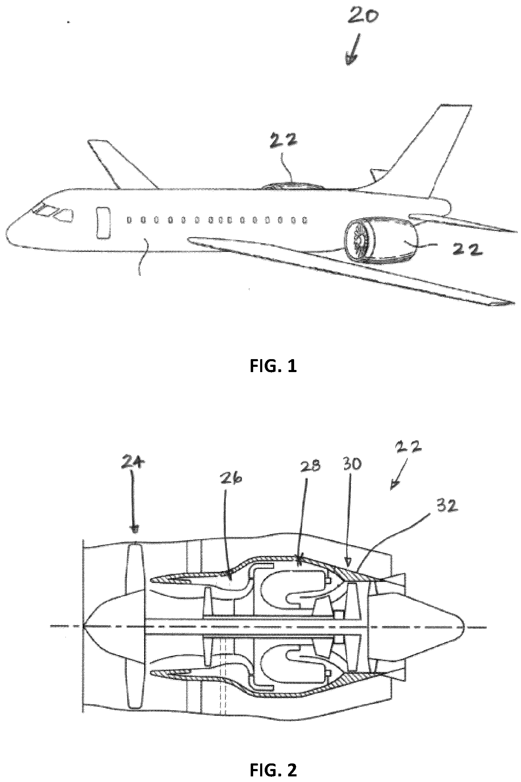

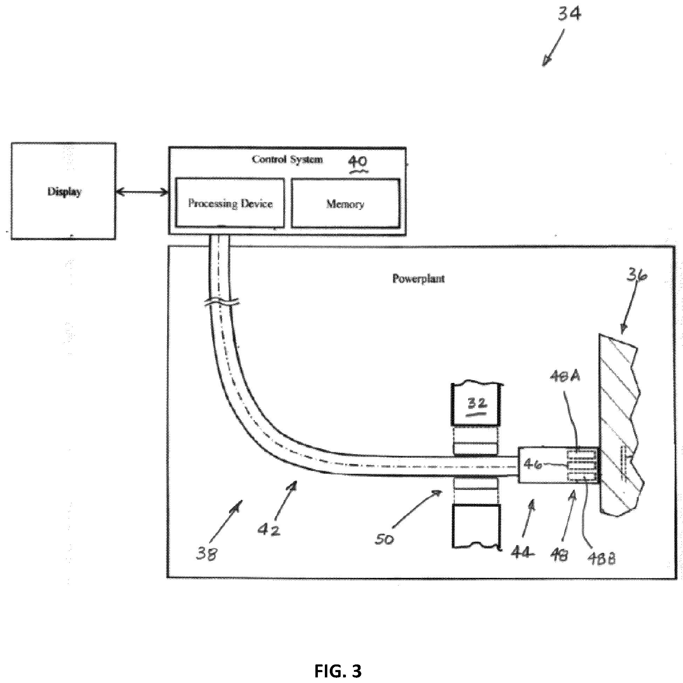

The present disclosure is directed to an inspection system that may be used to non-destructively inspect a component (e.g., see FIG. 3) of a powerplant for an aircraft 20. The aircraft may be an airplane, a helicopter, a drone (e.g., an unmanned aerial vehicle (UAV)) or any other manned or unmanned aerial vehicle. FIG. 1 illustrates an aircraft 20 in the form of an airplane having a pair of powerplants 22. The aircraft powerplant 22 may be configured as, or otherwise included as part of, a propulsion system for the aircraft 20. The aircraft powerplant 22, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. FIG. 2 diagrammatically illustrates a powerplant 22 in the form of a turbofan gas turbine engine having a fan section 24, a compressor section 26, a combustor section 28, a turbine section 30, and an engine casing 32. The aircraft powerplant 22 may alternatively be configured as, or otherwise included as part of, a power generation system for the aircraft 20. The aircraft powerplant 22, for example, may be an auxiliary power unit (APU) or any other type of gas turbine engine configured to mechanically power operation of an electrical generator. The present disclosure, however, is not limited to such exemplary aircraft powerplants. Aspects of the present disclosure, for example, may also be used for inspecting components of other types of internal combustion engines and/or components of various other types of power units; e.g., an electric machine, a hybrid-electric power unit, etc.

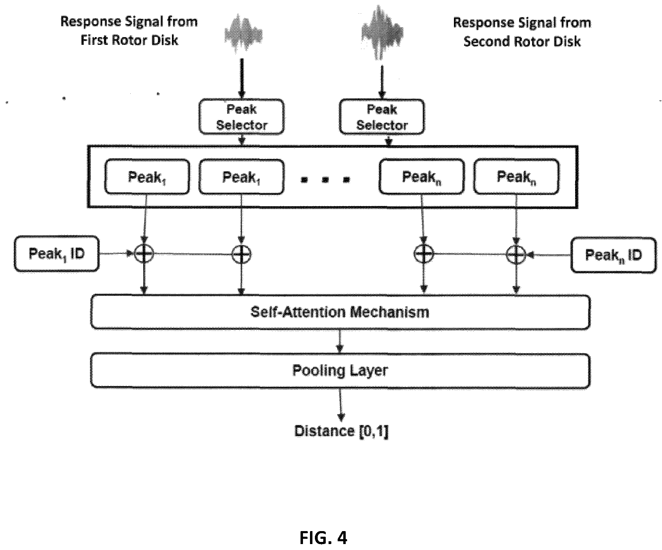

The inspection system 34 is configured to facilitate inspection of a powerplant component 36 while that component 36 remains installed within the aircraft powerplant and, for example, while the aircraft powerplant 22 remains substantially or completely assembled. FIGS. 3 and 4 diagrammatically illustrate an inspection system 34 engaged with a powerplant component 36 (e.g., a rotor disk of a rotor stage) disposed internally within an aircraft powerplant 22. The inspection system 34 is also configured to facilitate inspection of the powerplant component 36 while the aircraft powerplant 22 remains onboard the aircraft 20; e.g., remains installed on wing, on fuselage, in airframe, etc. The inspection of the powerplant component 36 may be performed using the inspection system 34 while the aircraft 20 is outside of an aircraft hangar (e.g., on the tarmac at an airport between aircraft flights), and/or at a dedicated inspection and/or repair facility. The inspection of the powerplant component 36 may thereby be performed with a relatively short aircraft 20 downtime and/or a relatively minimal expense. The inspection system 34, of course, may also be used for inspecting the powerplant component 36 installed with the aircraft powerplant 22 when that aircraft powerplant 22 is not installed with the aircraft 20 (e.g., prior to installation with the aircraft 20 or following removal from the aircraft 20) and/or when the aircraft powerplant 22 is partially disassembled into one or more sub-assemblies.

The powerplant component 36 may be any inspectable metallic component 36 within the aircraft powerplant 22. The present disclosure provides considerable utility, for example, in the inspection of rotor disks (e.g., a turbine rotor, a compressor rotor, or the like) within a gas turbine engine. To facilitate the description herein, the present disclosure will be described in terms of inspecting a component 36 in the form of a gas turbine engine rotor disk. To be clear, the present disclosure inspection system 34 is not limited to inspecting rotor disks.

Aspects of the present disclosure include an inspection system 34 that includes an electronic inspection scope 38 and a control system 40. The present disclosure may utilize a variety of different inspection scope 38 configurations, and therefore is not limited to any particular inspection scope 38 embodiment. An example of an inspection scope 38 that may be used is provided herein for illustration purposes. The inspection scope 38 includes a transducer that is configured to function as both a signal transmitter and a signal receiver. In some embodiments, the transducer may include at least one signal transmitter and at least one signal receiver, independent of one another. In some embodiments, the transducer may be configured as a single device that functions as both a transmitter and a receiver. To facilitate the description herein, the transducer will be described as having a signal transmitter independent of a signal receiver, but the present disclosure is not limited thereto. The inspection scope 38 may include structure for securing a portion of the inspection scope 38 to a structural member within the powerplant 22 and may include a mechanism for biasing the transducer in contact with a component 36 to be inspected.

FIG. 3 diagrammatically illustrates an example of an inspection scope 38 that includes a scope body 42, a scope head 44, a scope positional sensor 46, and a transducer 48. This example of an inspection scope 38 may also include structure for positionally fixing at least a part of the inspection scope 38; e.g., an expandable mount 50. In FIG. 3, the expandable mount 50 is diagrammatically shown in a stowed arrangement by a solid line and in a deployed arrangement by the dashed line. The expandable mount 50 is diagrammatically shown engaged with a component structure; e.g., engine casing 32, a panel, wall, or the like. The expandable mount 50 may also be configured to bias the scope head 44 against a surface of a component 36; e.g., a rotor disk.

The scope body 42 extends longitudinally along a longitudinal centerline and may be configured as a flexible body. The scope body 42 may include one or more internal actuators for manipulating the scope body 42 to aid in maneuvering the scope head 44 within the interior of the aircraft powerplant 22 to the component 36. The scope positional sensor 46 and the transducer 48 may be arranged with (e.g., mounted to and/or disposed in) the scope head 44. The scope positional sensor 46 (e.g., a camera, a proximity sensor, or the like) may be configured to aid in the maneuvering of the scope head 44 and, more particularly, maneuvering of the transducer 48 towards the component 36 to be inspected; e.g., a rotor disk. The transducer 48 includes a signal transmitter 48A and a signal receiver 48B.

The transducer signal transmitter 48A within the inspection scope 38 example shown in FIG. 3 may be configured to emit an excitation signal into the component 36 to be inspected; e.g., a rotor disk. A non-limiting example of a signal transmitter 48A that may be used is piezoelectric ultrasonic actuator that produces an ultrasonic excitation signal that may be transmitted into the component 36. The present disclosure is not limited to using a piezoelectric ultrasonic actuator, and in those embodiments that use a piezoelectric ultrasonic actuator, the present disclosure is not limited to any particular piezoelectric ultrasonic actuator configuration. An example of a piezoelectric ultrasonic actuator that may be used is a piezoelectric stack; sometimes referred to as a "PZT stack". Ultrasonic excitation signals may be in the range of 30-500kHz. In some embodiments, the excitation signals may be produced in particular frequency ranges; e.g., a five kilohertz (5 kHz) range, a ten kilohertz (10 kHz) range, a twenty kilohertz (20 kHz) range, or the like. The present disclosure is not limited to excitation signals in any particular frequency range. As will be detailed in further detail herein, the signal transmitter 48A is in communication with the control system 40 for controlling the operation of the signal transmitter 48A.

The transducer signal receiver 48B is configured to sense a signal within the component 36 (e.g., a rotor disk) that is produced in response to the emitted excitation signal and to produce a transducer response signal representative of the sensed signal. As will be detailed in further detail herein, the signal receiver 48B is in communication with the control system 40; e.g., response signals produced by the signal receiver 48B are provided to control system 40 for processing.

The control system 40 includes a controller (labeled as a processing device in FIG. 3) that is in communication with other system components such as the signal transmitter 48A and the signal receiver 48B; e.g., to control the operation of the respective system component and/or to receive signals from and/or transmit signals to that system component to perform the functions described herein. The controller may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the inspection system 34 to accomplish the same algorithmically and/or coordination of system components. The controller includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller may include, or may be in communication with, an input device (not shown) that enables a user to enter data and/or instructions, and may include, or be in communication with, an output device configured, for example to display information (e.g., a visual display as shown in FIG. 3, or a printer, or the like), or to transfer data, etc. Communications between the controller and other system components may be via a hardwire connection or via a wireless connection.

The control system 40 may include other components (e.g., signal processing hardware such as amplifiers, filters, analog to digital converters, or the like) in addition to or as an alternative to the components described herein.

Generally speaking, it is known to process transducer response signals (e.g., using stored instructions) to evaluate physical characteristics of a component 36 such as a rotor disk. Some existing approaches are limited to analyzing individual frequency peaks of transducer response signals to evaluate physical characteristics of a component 36. For example, individual signal peaks may be evaluated in terms of a univariate Gaussian distribution. When the signal peak differs significantly from an expected peak configuration (e.g., an outlier signal peak), the signal peak may be interpreted as being indicative of a defect or an undesirable anomaly present within the component 36. Component inspection using this approach is useful but often limited. For example, component to component variations in defect free components can produce signal peak variations that may be difficult to distinguish from signal peak variations attributable to defects or undesirable anomalies present within the component 36. The present disclosure provides a methodology that is understood to provide information beyond individual signal peak analysis and thereby provide improved information relating to the presence or absence of a defect or an undesirable anomaly within a component 36.

The present disclosure embodiments are configured (e.g., using stored instructions) to inspect a component 36 using machine learning in the form of a neural network that includes a self-attention mechanism to estimate a distance based on the offset of respective pairs of frequency peaks from a statistical value associated with that frequency peak; e.g., a mean value of that frequency peak, or the like. Each pair of frequency peaks may be described as having a first disk frequency peak acquired from a first rotor disk and a second disk frequency peak acquired from a second rotor disk.

During the learning process when response signal data is available from a statistically sufficient population of rotor disks (i.e., supervised learning), the neural network with its self-attention mechanism is used to estimate the distance for a substantial number of frequency peak pairs. In instances when a rotor disk inspection data (e.g., response signals) from a statistically sufficient population of rotor disks is not available, then an alternative process of creating learning data may be used; e.g., a triplet loss process.

FIG. 4 diagrammatically illustrates response signal data processing according to an embodiment of the present disclosure. Response signals from a first rotor disk and a second rotor disk are initially input for processing and a frequency peak from the respective response signals is chosen ("peak selector") to create a pair of frequency peaks. The number of frequency peak pairs are diagrammatically shown as "Peak₁, Peak₁... Peakₙ, Peakₙ" where "n" is an integer representative of the total number of frequency peak pairs utilized within a learning data set. The response signal data may be normalized to facilitate the processing of the response signal data.

A vector (labeled as "Peak₁ID... PeakₙID) is determined for each frequency peak pair that is representative of the location of the respective frequency peak. The vectors are combined additively with the respective frequency response (e.g., Peak₁... Peakₙ) into single representations; i.e., a single representation for the location of the respective peak and the frequency response for that peak. The respective single representations are subsequently input into the self-attention mechanism where they are transformed using linear transformations (query, key, and value). The self-attention mechanism calculates weighted representations of the input (value) based on the similarity between the query and key transformations. The data processing within the self-attention mechanism identifies relationships within the data and produces an understanding of the context which informs the weighting process.

The processed data produced in the self-attention mechanism may then be passed through the neural network to a pooling layer. The pooling layer functions to down sample the data received from the self-attention mechanism to produce a more manageable version of the input data; e.g., a summarized version. Two common functions utilized within a pooling layer are average pooling and maximum pooling. In those embodiments that include a pooling layer, the present disclosure is not limited to using any particular pooling layer functionality.

The output from the neural network processing may be configured as a real value (e.g., between zero and one) that is representative of the similarity of a rotor disk being inspected (e.g., a "subject rotor disk") relative to the population of disks having data within the data set. The population of disks having data within the data set may be represented by a representative value such as a mean value, or a mean offset value, or the like. During the learning process, the frequency pairs may be produced by processing the data from a first disk and a second disk that are known to be similar (e.g., response signals are similar) and processing the data from the first disk and a third disk that are known to be dissimilar (e.g., response signals are dissimilar). What is "similar" and what is "dissimilar" may be defined based on some initial clustering of inspection data. The neural network may then be optimized so that the estimated distance between the similar disks (and the population representative value) is minimized and the estimated distance between the dissimilar disks (and the population representative value) is maximized. Once the training is completed, the processed data produced by the neural network processing with self-attention may be modified to remove outlier data values (e.g., the lowest real value output from the self-attention mechanism). In addition, the neural network may be further modified (e.g., "tuned") using the data set remaining once the outlier data values have been removed.

Once the neural network is trained, the neural network may be used to evaluate inspection data (i.e., response signal) from a subject component and produce output (e.g., the real value between zero and one) that is representative of the similarity of the inspection data from the subject component relative to the inspection data of the population of disks within the neural network data set; e.g., the population representative value. The neural network output can then be used to produce an indication (e.g., a probability) of the presence or absence of a defect within the rotor disk being inspected. The process of producing a defect presence / absence indication may be accomplished in a variety of different ways. For example, the neural network output may be evaluated relative to a threshold value or the like. The present disclosure is not limited to any particular methodology for using the neural network output to produce a defect presence / absence indication.

The present disclosure is understood to provide information not available from inspection methods that are limited to analyzing individual frequency peaks of transducer response signals from particular rotor disks. On the contrary, the present disclosure provides robust information based on data representative of response signal frequency peak to response signal frequency peak between pairs of rotor disks. The present disclosure is understood to provide significantly enhanced accuracy; e.g., by mitigating component to component variability.

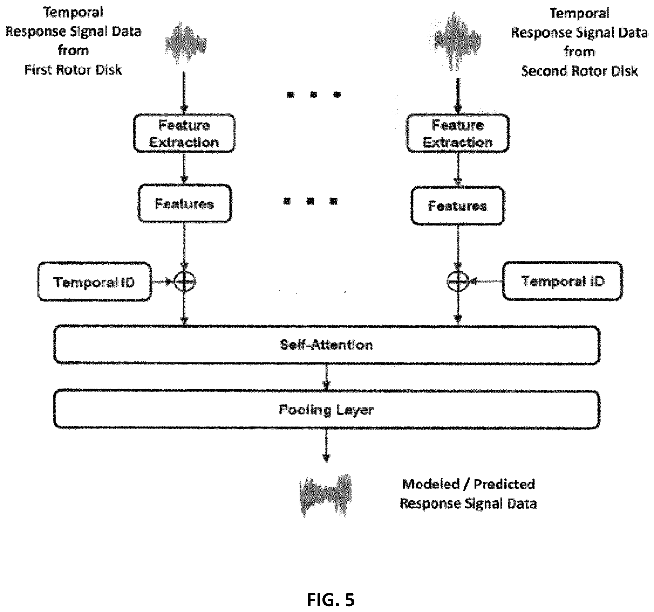

Embodiments of the present disclosure may also be configured to model the evolution of frequency responses within a component 36 as a function of time; e.g., model / predict future frequency responses based on the historical response signal data. FIG. 5 diagrammatically illustrates an example of this embodiment. The neural network may be configured (e.g., via stored instructions) to extract features within the response signal data that have a greater probability of indicating changes in the component 36 on a temporal basis. This embodiment may include producing an input into the self-attention mechanism that includes portions of the response signal (e.g., the extracted features from the component 36 pairs) and an embedding representative of a difference in time between multiple response signal sensing; e.g., response signal feature @ T1, response signal feature @ T2,... response signal feature @ TN (where "N" is an integer). In a manner similar to that described herein, the self-attention mechanism may be used to transform the input data into vector form representative of the offsets of the frequency peak pair / the estimated distances for each temporal input data (e.g., "Temporal ID") and process the data to determine temporal changes / trends. The temporal data may then be used to model future frequency responses. The neural network embodiment example diagrammatically shown in FIG. 5 includes a pooling layer like that described above. This embodiment does not require a pooling layer. The modeled response signal data is understood to provide significant value in the maintaining a powerplant 22. For example, modeled response signal data can be used to evaluate the rate of change of the component 36; e.g., indicate whether the response signal is changing at a rate that is understood to be normal, or at a rate that is indicative of a defect developing. In some instances, a component 36 may have a defect that is within acceptable parameters. The modeled response signal data can be used to evaluate whether the defect is changing, and if so whether the defect is changing at a rate that is understood to be normal or abnormal. The trained neural network of this present disclosure embodiment is understood to provide enhanced inspection data providing greater, more accurate insight. Furthermore, the feature representation strategy of the modeling / predictive data allows the neural network model to adapt to irregular inspection intervals or missing data.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A method of inspecting a component (36) for the presence or absence of a defect, comprising:
using a transducer (48) to inspect a subject component (36) comprising a solid metallic material by transmitting a first signal into the subject component (36) and sensing the subject component (36) for a second signal produced as a result of the first signal being transmitted into the subject component (36), and producing a subject component response signal representative of the second signal;
processing the subject component response signal received from the transducer (48), the processing using a neural network trained on response signal training data from pairs of training components, and the processing including producing a neural network output value; and
producing an indication of a presence or an absence of a defect in the subject component (36) based on the neural network output value.

2. The method of claim 1, wherein the neural network includes a self-attention mechanism.

3. The method of claim 1 or 2, wherein each said training component is the same type as the subject component.

4. The method of claim 1, 2 or 3, wherein the response signal training data for each said training component includes a first frequency peak.

5. The method of claim 4, wherein each respective pair of training components includes a first training component and a second training component, wherein the first training component, the second training component, and the subject component (36) are all the same type.

6. The method of claim 5, wherein the response signal training data from a respective pair of training components includes a first peak offset value representative of a first distance between the first frequency peak within a response signal of the first training component and a predetermined value, and a second peak offset value representative of a second distance between the first frequency peak within a response signal of a second training component and the predetermined value, optionally wherein the predetermined value is a mean value of the first frequency peak.

7. The method of any preceding claim, wherein the step of processing the subject component response signal utilizes the subject component response signal and response signals from a plurality of training components.

8. The method of any preceding claim, wherein the response signal training data for each said training component (TC) includes a TC response signal portion for a/the first frequency peak, and the subject component (SC) response signal includes a SC response signal portion for the first frequency peak, and the TC response signal portion for the first frequency peak and the SC response signal portion for the first frequency peak are combined with a location of the first frequency peak as a single representation that is input into a/the self-attention mechanism.

9. The method of any preceding claim, further comprising using the neural network to model future subject component response signals of the subject component (36) based on a plurality of historical subject component response signals, optionally further comprising using the neural network to determine a subject component response signal rate of change and/or a future subject component response signal rate of change.

10. A component inspection system (34), comprising:
a signal transmitter (48A);
a signal receiver (48B); and
a controller in communication with the signal transmitter (48A), the signal receiver (48B), and a non-transitory memory storing instructions, which instructions when executed cause the controller (40) to:
control the signal transmitter (48A) to transmit a first ultrasonic signal into a subject component (36) comprising a solid metallic material;
control the signal receiver (48B) to sense the subject component (36) for a second ultrasonic signal and produce a subject component response signal representative of the second ultrasonic signal;
process the subject component response signal, the processing using a neural network trained on response signal training data from pairs of training components, and the processing including producing a neural network output value; and
produce an indication of a presence or an absence of a defect in the subject component (36) based on the neural network output value.

11. The system of claim 10, wherein the neural network includes a self-attention mechanism, and/or wherein each said training component is the same type as the subject component (36).

12. The system of claim 10 or 11, wherein the response signal training data for each said training component includes a first frequency peak.

13. The system of claim 12, wherein each respective pair of training components includes a first training component and a second training component, wherein the first training component, the second training component, and the subject component (36) are all the same type; and
wherein the response signal training data from a respective pair of training components includes a first peak offset value representative of a first distance between the first frequency peak within a response signal of the first training component and a predetermined value, and a second peak offset value representative of a second distance between the first frequency peak within a response signal of a second training component and the predetermined value, optionally wherein the predetermined value is a mean value of the first frequency peak.

14. The system of any of claims 10 to 13, wherein the response signal training data for each said training component (TC) includes a TC response signal portion for a/the first frequency peak, and the subject component (SC) response signal includes a SC response signal portion for the first frequency peak, and the TC response signal portion for the first frequency peak and the SC response signal portion for the first frequency peak are combined with a location of the first frequency peak as a single representation that is input into a/the self-attention mechanism.

15. The system of any of claims 10 to 14, wherein the instructions when executed cause the controller (40) to use the neural network to model future subject component response signals of the subject component (36) based on a plurality of historical subject component response signals.
